# EUROPEAN PATENT SPECIFICATION

(11) **EP 1 095 964 B1**
(45) Date of publication and mention of the grant of the patent: **15.12.2004**
(21) Application number: 00500217.5
(22) Date of filing: 25.10.2000
(51) Int. Cl.: C08J 5/18, C08K 3/38, A01G 13/02, A01G 9/14

(54) **Polymeric thermal films for use in agriculture**
Polymere Thermalfilme zur Verwendung in der Landwirtschaft
Film polymère thermique utilisable dans le domaine de l'agroalimentaire

(30) Priority: 29.10.1999 ES 9902390
(43) Date of publication of application: 02.05.2001
(73) Proprietor: REPSOL QUIMICA S.A., E-28046 Madrid (ES)
(72) Inventor: Espi Guzman, Enrique, 28034 Madrid (ES); Salmeron Cano, Armando, 28320 Pinto - Madrid (ES)
(74) Representative: Del Santo Abril, Natividad

(56) References cited:
- EP-A- 0 550 010
- EP-A- 0 850 980
- FR-A- 2 652 194
- US-A- 4 373 048
- US-A- 4 651 467
- US-A- 5 059 651
- DATABASE WPI Section Ch, Week 199101 Derwent Publications Ltd., London, GB; Class A97, AN 1991-003189 XP002159989 & JP 02 279733 A (MITSUBISHI PETROCHEMICAL CO LTD), 15 November 1990 (1990-11-15)

## Description

This invention refers to polyolefinic film for use in agriculture and, more precisely, to said films for greenhouse coverings or for ground covering.

Well known in the present state of the art is the cultivation of plants under tunnels or greenhouses with plastic coverings opaque to long wave infrared radiation, especially in the interval between 7 and 14 microns, in which the dry atmosphere is particularly transparent. As a result these methods have provided the production of more abundant and earlier harvests.

The beneficial effects that these films have on the crops are more accused the more opaque that these films are to infrared radiation, in the interval of the wavelengths mentioned before, and, at the same time, more transparent to the visible light necessary for the photosynthesis.

These films, which are internationally known as "thermal" films, also reduce the risk of damage due to frosts when there is no heating inside the greenhouse. At the same time, when there is heating, these films reduce the energy consumption. Both effects are attributable to the reduction of radiated heat loss.

The majority of plastic films transparent to visible light are to some degree opaque to the infrared radiation mentioned previously. The most widely used in the whole world for this application is polyethylene film due to other technical and economical advantages. However, it is very transparent to the infrared radiation comprised between 7 and 14 microns.

The previous attempts to alleviate the problems related to the use of polyethylene films as crop protectors have consisted in the addition of "thermal additives," preferably of the mineral type, such as: natural silicates (talc, kaolin, etc.), synthetic silicates (zeolite, etc.) silica, hydrotalcite, calcium carbonate, barium sulfate, aluminum hydroxide, metallic borates, anhydrous borax, metallic hydroxisulfates, etc.

The following patents reflect what is mentioned above:

Silica, silicates and aluminum hydroxide: Spanish patent ES-439227 (1976) and Swiss patent CH-513932 (1971).

Borates and anhydrous borax: United States patents US-4651467 (1987) and 4559381 (1985).

Hydrotalcite: Japanese patents JP-01006041 (1989) and JP-63175072 (1988) and European patent EP-0429731 A1 (1989).

Barium sulfate: Japanese patents JP-82202334 (1982) and JP-87215641 (1987).

Metallic hydroxisulfates: United States patent US 4134875 (1978).

The addition of the mentioned products to polyethylene presents some disadvantages. For example, the majority of them must be added in large amounts to attain a good opacity to infrared radiation, and they thus act as a load in the polyolefinic base, making its mechanical properties decrease and, more importantly, the total transmission of visible light.

Surprisingly, it has been found that mixtures comprising at least one additive belonging to group A, and at least one additive belonging to group B provide a greater thermal effect than expected based on the properties of the individual additives.

Group A comprises the borates that are stable at the processing temperature and anhydrous borax, while group B comprises silica, silicates, carbonates, and sulfates. When these two components are mixed, the thermal effect obtained is clearly greater than could be expected making a weighted average of the effect of the individual components. Therefore, using the mixtures of the present invention, it is possible to use small amounts of an additive of group A (for example, zinc borate), in combination with an additive of group B to obtain a thermal film of excellent properties.

Therefore, the object of the present invention is to provide a polyolefin film that comprises, at least, two different additives: one, at least, pertaining to group A and one, at least, pertaining to group B, as described previously.

It is well known that borates and anhydrous borax are the most efficient additives for the preparation of thermal films. However, they are more expensive than the additives of group B. This fact limits their use in practice. Presently, the thermal films used are based on additives from group B, in spite of their worse properties.

The use of mixtures of additives according to the present invention allows to considerably improve the films based on additives from group B without considerably increasing the cost, using a limited amount of an additive from group A (for example, 1%).

On the other hand, it is possible to maintain or even improve the properties of the best films described previously (films based on borates or anhydrous borax as the only additive) replacing part of the borate with an additive from group B. The obtained film is less expensive than the previously existing films and in some cases it presents an even higher thermal effect.

Also, the use of mixtures according to the present invention allows the use of a considerably smaller amount of additives to obtain a determined thermal effect. This fact is relevant not only economically, but rather it also improves in an important way the mechanical properties of the film, which are affected negatively by the presence of these additives.

In one particular embodiment the invention provides a thermal polymeric film for agricultural use in which its composition comprises between, approximately, 85% and, approximately, 99% of weight of a polyolefin and between, approximately, 1% and, approximately, 15% of weight of the mixture of the components of group A and of group B. The weight ratio between the components of group A and group B is greatly variable and is comprised, preferably, between approximately 1:5 and approximately 50:1.

The processing temperature depends on the type of polymer used. When using a polyethylene of low density, the regular processing temperature is between 180 and 240° C, so the borate should not decompose in this operational interval. An example of a borate stable up to 290° C is zinc borate.

When using PVC, the processing temperatures are lower. This fact allows the use of borates with a lower decomposition temperature.

The particle size of these additives is not crucial. However, it is preferable to work with additives that have an average particle size of between 1 and 10 microns. In fact, if the particles are thicker it is difficult to disperse the additive in a homogenous way in the polymer.

The preferred compound in group A is zinc borate. The preferred zinc borate is the one that has the structural formula 2ZNO.3B₂O₃.3,5H₂O and a particle size between 1 and 5 microns.

The preferred components in group B are calcined kaolin, silica, mica, hydrotalcite, calcium sulfate, calcium carbonate and talc. The most preferred are calcined kaolin and silica.

The preferred form of calcined kaolin has the structural formula 2SIO₂.AI₂O₃ and an average particle size between 1 and 5 microns.

The preferred form of silica (SIO₂) has an average particle size of between 1 and 10 microns

The weight ratio between the components of group A and those of group B oscillates between, approximately, 1:5 and, approximately, 50:1, preferably between 1:4 and 4:1 and even more preferably between 1:3 and 3:1.

With the term "polyolefin" a base polymer is to be understood, selected among polyethylene, for example a low density polyethylene, linear polyethylene, copolymers of ethylene and a vinylic ester, for example copolymers ethylene-vinyl acetate (EVA), copolymers of ethylene and an alkyl methacrylate, for example, copolymers ethylene-butyl acrylate (EBA), poly (vinyl chloride) (PVC) or mixtures of these.

The compositions according to this invention may also optionally contain light stabilizers, for example, of the esterically impeded amines (HALS) type, ultraviolet absorbents of a type different than the HALS, antioxidants, antiblocking agents, antidrip additives, sliders, antistatics, lubricants and their mixtures.

The thermal polymeric film provided by this invention can be a single-layer or multi-layer film.

The following examples illustrate, by comparison with other formulations, the preferred polymeric formulations according to the present invention.

### Example 1

Various compositions were prepared mixing low density polyethylene with a series of known additives opaque to infrared radiation and mixtures according to the present invention. In all cases the composition includes a 95% of polyethylene and 5% in weight of the thermal additive. The mixture was performed in rotating mixers and afterwards a film of 200 microns in width was manufactured by the extrusion and tubular blowing method. The measurements of infrared efficiency were performed according to standard EN 13206. The obtained results are shown in Tables I and II. These clearly show the greater efficiency of the additives according to the present invention.

In Table II, the expected values have been calculated as the weighted average in weight of the obtained values with the individual additives.

**Table I**

| **Infrared efficiency of the pure thermal additives** | |
|---|---|
| **Additive** | **IR efficiency (%)** |
| Zinc borate | 92.9 |
| Calcined kaolin | 87.8 |
| Silica | 87.1 |
| Mica | 82.8 |
| Hydrotalcite | 82.4 |
| Calcium carbonate | 75.7 |
| Talc | 71.0 |
| Calcium sulfate | 64.0 |

**Table II**

| **Infrared efficiency of mixtures of zinc borate and other thermal additives** | | | | |
|---|---|---|---|---|
| | **Weight ratio 3:2** | | **Weight ratio 2:3** | |
| | **Measured value** | **Expected value** | **Measured value** | **Expected value** |
| ZB + calcined kaolin | 94.0 | 90.9 | 93.5 | 89.8 |
| ZB + silica | 93.3 | 90.6 | 92.4 | 89.4 |
| ZB + mica | 91.4 | 88.9 | 89.8 | 86.8 |
| ZB + hydrotalcite | 92.6 | 88.7 | 91.0 | 86.6 |
| ZB + calcium carbonate | 90.1 | 86.0 | 87.6 | 82.6 |
| ZB + talc | 89.8 | 84.1 | 85.8 | 79.8 |
| ZB + calcium sulfate | 89.3 | 81.3 | 85.1 | 75.6 |

### Example 2

Various films were prepared of 200 microns of width with different mixtures of additives according to the present invention, using the same procedure as in example 1. In all of the cases, the composition includes a 95% of low density polyethylene or copolymer EVA, with a 14% content of vinyl acetate, and a 5% of thermal additive. The results are shown in the following Tables III, IV and V. These show the greater efficiency of the mixtures according to the present invention compared with the pure additives.

**Table III**

| **Infrared efficiency of the mixture zinc borate / calcined kaolin (different weight ratios) in polyethylene** | | | | | | | |
|---|---|---|---|---|---|---|---|
| Zinc borate | 9:1 | 4:1 | 3:2 | 2:3 | 1:4 | 1:9 | Calcined kaolin |
| 92.9 | 93.4 | 93.7 | 94.0 | 93.5 | 91.9 | 90.3 | 87.8 |

**Table IV**

| **Infrared efficiency of the mixture zinc borate / calcined kaolin (different weight ratios) in copolymer EVA** | | | | | | | |
|---|---|---|---|---|---|---|---|
| Zinc borate | 9:1 | 4:1 | 3:2 | 2:3 | 1:4 | 1:9 | Calcined kaolin |
| 96.8 | 97.1 | 97.3 | 97.5 | 97.6 | 97.2 | 96.9 | 96.2 |

**Table V**

| **Infrared efficiency of the mixture zinc borate / silica (different weight ratios) in polyethylene** | | | | | | | |
|---|---|---|---|---|---|---|---|
| Zinc borate | 9:1 | 4:1 | 3:2 | 2:3 | 1:4 | 1:9 | Silica |
| 92.9 | 93.3 | 93.5 | 93.3 | 92.4 | 90.5 | 89.1 | 87.1 |

### Example 3

Various films were prepared of 200 microns of width using the same procedure as Example 2.

**Table VI**

| **Infrared efficiency of different amounts of the mixture zinc borate / calcined kaolin (3:2 weight ratio) in polyethylene** | | | |
|---|---|---|---|
| | **Zinc borate** | **Mixture** | **Calcined kaolin** |
| 10% total additive | 98.2 | 98.9 | 93.7 |
| 5% total additive | 92.9 | 94.0 | 87.8 |
| 3% total additive | 86.1 | 86.7 | 80.7 |

**Table VII**

| **Infrared efficiency of different amounts of the mixture zinc borate / silica (3:2 weight ratio) in polyethylene** | | | |
|---|---|---|---|
| | **Zinc borate** | **Mixture** | **Silica** |
| 10% total additive | 98.2 | 98.2 | 94.2 1 |
| 5% total additive | 92.9 | 93.3 | 87.1 |
| 3% total additive | 86.1 | 86.5 | 80.3 |

### Example 4

Various compositions were prepared mixing low density polyethylene with a series of known additives opaque to infrared radiation and with mixtures according to the present invention. Films of 200 microns in width were manufactured using the same procedure as in Example 1. In all of the cases the amount of additive was calculated to obtain the same infrared efficiency (88%). The measurements of the overall transmission of visible light were done according to standard ASTM D 1003. The obtained results are shown in Tables VIII, IX and X.

**Table VIII**

| **Amount (% in weight) of thermal additive necessary to reach an 88% of infrared efficiency** | | | |
|---|---|---|---|
| **Additive** | **Pure additive** | **ZB Mixture** + **additive (3:2 weight ratio)** | **ZB Mixture** + **additive (2:3 weight ratio)** |
| Zinc borate | 3.4 | - | - |
| Calcined kaolin | 5.1 | 3.2 | 3.4 |
| Silica | 5.4 | 3.3 | 3.5 |
| Mica | 7.5 | 3.9 | 4.4 |
| Hydrotalcite | 7.8 | 3.6 | 4.1 |
| Calcium carbonate | 9.7 | 4.3 | 5.1 |
| Talc | 19.6 | 4.5 | 5.9 |
| Calcium sulfate | >30 (unprocessable) | 4.5 | 6.2 |

**Table IX**

| **Overall transmission of visible light of films with purethermal additives** | | | |
|---|---|---|---|
| **Additive** | **Content of additive (% in weight)** | **Infrared efficiency (%)** | **Overall transmission of visible light (%)** |
| Zinc borate | 3.4 | 88.0 | 90.2 |
| Calcined kaolin | 5.1 | 88.0 | 89.6 |
| Silica | 5.4 | 88.0 | 89.7 |
| Mica | 7.5 | 88.0 | 88.1 |
| Hydrotalcite | 7.6 | 88.0 | 90.0 |
| Calcium carbonate | 9.7 | 88.0 | 85.6 |
| Talc | 19.6 | 88.0 | 84.3 |
| Calcium sulfate | >30 (unprocessable) | 88.0 | - |

**Table X**

| **Overall transmission of visible light of films withmixtures according to the present invention(weight ratio 3:2)** | | | |
|---|---|---|---|
| **Additive** | **Total content of additive (%)** | **Infrared efficiency (%)** | **Overall transmission of visible light (%)** |
| ZB + calcined kaolin | 3.2 | 88.0 | 90.3 |
| ZB + silica | 3.3 | 88.0 | 90.4 |

## Claims

1. A thermal polymeric film for agricultural use that comprises a polyolefin and a mixture of, at least, a compound selected from the group made up of the borates stable at the processing temperature and anhydrous borax (group A) and, at least, a compound selected from the group made up of silica, silicates, carbonates and sulfates (group B) .

2. A polymeric film according to claim 1, in which its composition contains between an 85% and a 99% in weight of a polyolefin and between 1% and 15% in weight of the mixture of the compounds of group A and group B.

3. A polymeric film according to claims 1 and 2, in which the weight ratio of the compounds of group A and group B is comprised between 1:5 and 50:1.

4. A polymeric film according to claims 1 to 3, in which said polyolefin is polyethylene, a copolymer of ethylene and an alkyl acrylate, a copolymer of ethylene and an alkyl methacrylate, PVC or mixtures of them.

5. A polymeric film according to claims 1 to 4, in which the additive of group A is zinc borate and the additive of group B is calcined kaolin.

6. A polymeric film according to claims 1 to 4, in which the additive of group A is zinc borate and the additive of group B is silica.

7. A polymeric film according to claims 1 to 6, in which the polyolefin is polyethylene.

8. A polymeric film according to claims 1 to 6 which also comprises additives selected from the group made up of antioxidants, light stabilizers, antidrip additives, antistatics, lubricants and their mixtures.

9. A polymeric film according to claims 1 or 2 in which said film is a single layer film or a multilayer film.

## Patentansprüche

1. Thermische Polymerfolie zur landwirtschaftlichen Verwendung, die ein Polyolefin und eine Mischung aus mindestens einer Verbindung, ausgewählt aus der von den Boraten, die bei der Verarbeitungstemperatur stabil sind, und dem wasserfreien Borax gebildeten Gruppe (Gruppe A) und mindestens einer Verbindung, ausgewählt aus der von Kieselerde, Silikate, Carbonate und Sulfate gebildeten Gruppe (Gruppe B) umfasst.

2. Polymerfolie nach Anspruch 1, bei welcher die Zusammensetzung zwischen 85 und 99 Gew.-% eines Polyolefins und zwischen 1 und 15 Gew.-% der Mischung der Verbindungen aus Gruppe A und Gruppe B enthält.

3. Polymerfolie nach den Ansprüchen 1 und 2, bei welcher das Gewichtsverhältnis der Verbindungen der Gruppe A und der Gruppe B zwischen 1:5 und 50:1 liegt.

4. Polymerfolie nach den Ansprüchen 1 bis 3, bei welcher das besagte Polyolefin Polyethylen, ein Ethylen/Alkylacrylat-Copolymer, ein Ethylen/Alkylmethacrylat-Copolymer, PVC oder eine Mischung derselben ist.

5. Polymerfolie nach den Ansprüchen 1 bis 4, bei welcher das Zusatzmittel der Gruppe A Zinkborat ist und das Zusatzmittel der Gruppe B kalzinierter Kaolin ist.

6. Polymerfolie nach den Ansprüchen 1 bis 4, bei welcher das Zusatzmittel der Gruppe A Zinkborat und der Zusatz der Gruppe B Kieselerde ist.

7. Polymerfolie nach den Ansprüchen 1 bis 6, bei welcher das Polyolefin Polyethylen ist.

8. Polymerfolie nach den Ansprüchen 1 bis 6, die außerdem Zusatzmittel, ausgewählt aus der von Antioxidantien, Lichtstabilisatoren, Antitropfmittel, Antistatika, Schmiermittel und deren Mischungen gebildeten Gruppe umfasst.

9. Polymerfolie nach den Ansprüchen 1 oder 2, bei welcher die besagte Folie eine einschichtige Folie oder eine mehrschichtige Folie ist.

## Revendications

1. Feuille de polymère thermique pour usage agricole, comprenant une polyoléfine et un mélange de, au moins, un composé choisi parmi le groupe formé par les borates stables à la température de traitement et le borax anhydre (groupe A) et, au moins, un composé choisi parmi le groupe formé par la silice, les silicates, les carbonates et les sulfates (groupe B).

2. Feuille de polymère selon la revendication 1, dans laquelle sa composition contient entre 85% et 99% en poids d'une polyoléfine et entre 1% et 15% en poids du mélange des composés du groupe A et du groupe B.

3. Feuille de polymère selon les revendications 1 et 2, dans laquelle le rapport du poids des composés du groupe A et du groupe B est compris entre 1:5 et 50:1.

4. Feuille de polymère selon les revendications 1 à 3, dans laquelle ladite polyoléfine est du polyéthylène, un copolymère d'éthylène et d'un acrylate d'alkyl, un copolymère d'éthylène et d'un méthacrylate d'alkyl, du PVC ou des mélanges de ceux-ci.

5. Feuille de polymère selon les revendications 1 à 4, dans laquelle l'additif du groupe A est du borate de zinc et l'additif du groupe B est du kaolin calciné.

6. Feuille de polymère selon les revendications 1 à 4, dans laquelle l'additif du groupe A est du borate de zinc et l'additif du groupe B est de la silice.

7. Feuille de polymère selon les revendications 1 a 6, dans laquelle la polyoléfine est du polyéthylène.

8. Feuille de polymère selon les revendications 1 à 6, comprenant en outre des additifs choisis parmi le groupe formé par les antioxydants, les photostabilisateurs, les additifs antigoutte, les agents antistatiques, les lubrifiants et leurs mélanges.

9. Feuille de polymère selon les revendications 1 ou 2, dans laquelle ladite feuille est une feuille ayant une seule couche ou une feuille multicouche.
